# EUROPÄISCHE PATENTSCHRIFT

(11) **EP 1 516 109 B1**
(45) Veröffentlichungstag und Bekanntmachung des Hinweises auf die Patenterteilung: **08.03.2006**
(21) Anmeldenummer: 03760692.8
(22) Anmeldetag: 25.06.2003
(51) Int. Cl.: F02B 63/04

(54) **VORRICHTUNG ZUR KÜHLUNG EINER STROMERZEUGEREINHEIT**
DEVICE FOR COOLING A CURRENT GENERATOR UNIT
DISPOSITIF DE REFROIDISSEMENT D'UNITE GENERATRICE DE COURANT

(30) Priorität: 25.06.2002 DE 10228224
(43) Veröffentlichungstag der Anmeldung: 23.03.2005
(73) Patentinhaber: Motorenfabrik Hatz GmbH & Co. KG, 94099 Ruhstorf (DE)
(72) Erfinder: HATZ, Ernst, 94099 Ruhstorf/Rott (DE); MOSER, Franz, A-4784 Schardenberg (AT)
(74) Vertreter: Grättinger & Partner (GbR)
(86) Internationale Anmeldenummer: PCT/EP2003/006656
(87) Internationale Veröffentlichungsnummer: WO 2004/001207

(56) Entgegenhaltungen:
- EP-A- 0 931 919
- EP-A- 1 054 147
- US-A- 6 119 636

## Beschreibung

Die vorliegende Erfindung betrifft eine Vorrichtung zur gemeinsamen Kühlung von Generator und antreibenden Hubkolbenverbrennungsmotor einer Stromerzeugereinheit.

Derartige Kühleinrichtungen sind bekannt. Beispielsweise beschreibt die EP 1 054 144 A2 eine Motor-Generator-Einheit, bei welcher ein Hauptlüfterrad zur gemeinsamen Kühlung von Generator und Motor angeordnet ist, welches zusammen mit dem vom Motor angetriebenen Rotor des Generators gedreht wird. Durch Drehung des Hauptlüfterrads wird frische Kühlluft über im Generatorgehäuse angeordnete Öffnungen in Form von Löchern und Schlitzen angesaugt und zur Kühlung des Generators einer Generatorkühlstrecke und zur Kühlung des Motors einer Motorkühlstrecke zugeführt. Neben dem Hauptlüfterrad ist ein weiteres Hilfslüfterrad vorgesehen, durch welches über weitere Öffnungen des Generatorgehäuses Kühlluft, welche insbesondere zur Kühlung des Stators und der Spulen dient, in den Generator angesaugt wird. Die über das Hilfslüfterrad angesaugte Kühlluft wird mit der von dem Hauptlüfterrad angesaugten Kühlluft vermischt und dem Motor zu dessen Kühlung zugeführt.

Darüber hinaus beschreibt die DE 100 10 248 A1 der jetzigen Anmelderin eine derartige Kühleinrichtung für einen Stromerzeuger als Einheit aus Antriebsmotor und Generator. Zur gemeinsamen Luftkühlung von Antriebsmotor und Generator dient bei dieser Vorrichtung ein Lüfterrad. Das Lüfterrad wird durch die Kurbelwelle des Antriebsmotors gedreht, wodurch frische Kühlluft durch hierfür vorgesehen Öffnungen des Generatorgehäuses angesaugt wird. Die Kühlluft passiert zur Kühlung des Generators den Generatorinnenraum und wird anschließend dem Antriebsmotor zu dessen Kühlung zugeführt.

Obgleich mit den im Stand der Technik bekannten Kühleinrichtungen befriedigende Kühlleistungen erzielt werden können, hat es sich als nachteilig erwiesen, dass zum Ansaugen der frischen Kühlluft über das Generatorgehäuse dieses mit entsprechend großen Durchtrittsöffnungen für die Kühlluft ausgestattet werden muss, wie dies beispielsweise auch bei den Stromerzeugereinheiten aus der EP 0893586 A2 und US 5433157 durch generatorseitige Ansaugöffnungen der Fall ist. Dies gilt umso mehr, wenn - wie üblich - die gesamte Kühlluft für Generator und Antriebsmotor über das Generatorgehäuse angesaugt wird, weil an dem Antriebsmotor im Vergleich zu dem Generator eine um den Faktor 10 bis 20 höhere Kühlleistung erbracht werden muss.

Soll die Stromerzeugereinheit generatorseitig nach außen hin weitgehend abgeschlossen werden, beispielsweise um den hohen Schutzgrad von nach DIN 40050 genormten elektrischen Einrichtungen zu erzielen, so gelingt dies wegen der großen Luftdurchtrittsöffnungen jedoch nur bedingt. Bisher sind hierzu technisch aufwändige und kostenintensive Vorkehrungen zu treffen. So kann der Generator, neben seinem eigentlichen Generatorgehäuse, in einer mechanisch festen, wasser- und staubdichten Schutzhülle untergebracht werden. Zur Kühlung des Generators wird die Schutzhülle von außen von dem Kühlmedium umströmt, was voraussetzt, dass ein ausreichender Wärmetransport vom Generator zur Schutzhülle gewährleistet ist. Obendrein muss zusätzlich für eine entsprechend gesicherte Kabelführung des Generators gesorgt werden. Neben den damit verbundenen technischen Schwierigkeiten und den hohen Kosten benötigt eine solche Lösung ausreichend Platz zur Montage, was bereits deshalb in vielen Fällen ein unüberwindbares Hindernis darstellen wird.

Aufgabe der vorliegenden Erfindung ist es, die Nachteile der im Stand der Technik bekannten Einrichtungen zur gemeinsamen Kühlung von Generator und Hubkolbenverbrennungsmotor zu überwinden. Diese Aufgabe wird nach einem Vorschlag der Erfindung durch die Merkmale des unabhängigen Anspruchs gelöst. Vorteilhafte Ausgestaltungen der Erfindung sind durch die Merkmale der abhängigen Ansprüche gegeben.

Erfindungsgemäß wird eine Stromerzeugereinheit aus Generator und Hubkolbenverbrennungsmotor als Antrieb, insbesondere aus Synchrongenerator und Dieselmotor, mit einer zur gemeinsamen Kühlung von Generator und Hubkolbenverbrennungsmotor vorgesehenen Kühleinrichtung vorgeschlagen, bei welcher durch ein die Kühlluft axial ansaugendes und radial abführendes Lüfterrad, das wenigstens einen ersten Durchgang im radial äußeren Bereich der Beschaufelung und wenigstens einen zweiten Durchgang radial innerhalb der Beschaufelung umfasst, ein kleinerer Teil der Kühlluft ("Generatorkühlluft") nur dem Generator motorseitig durch den ersten, äußeren Durchgang zugeführt und durch den zweiten, inneren Durchgang wieder abgeführt wird, während ein überwiegender Teil der Kühlluft ("Motorkühlluft") dem Hubkolbenverbrennungsmotor durch das Lüfterrad zugeführt wird.

Da der zweite innere Durchgang an dem die Kühlluft ansaugenden Abschnitt des Lüfterrads angeordnet ist (das Lüfterrad saugt die Kühlluft im wesentlichen in seiner axialen Mitte an), wird durch die dortige Saugwirkung die Generatorkühlluft aus dem Generator gesaugt. Insgesamt bildet sich im Generator eine Generatorkühlluftströmung aus, bei der die aus dem Lüfterrad radial abströmende Generatorkühlluft durch den ersten, äußeren Durchgang dem Generator zugeführt und durch den zweiten, inneren Durchgang des Lüfterrads wieder aus dem Generatorraum abgeführt wird. Die durch den zweiten, inneren Durchgang des Lüfterrads strömende Generatorkühlluft vermischt sich anschließend mit der von dem Lüfterrad angesaugten frischen Kühlluft, wobei die nun leicht angewärmte Kühlluft zum kleineren Teil dem Generator und zum größeren Teil dem Antriebsmotor zugeführt wird.

Der erste, äußere Durchgang zum Eintritt der Generatorkühlluft in den Generator liegt vorzugsweise in Form eines kreisförmigen Schlitzes vor. Der Schlitz kann beispielsweise eine öffnungsbreite von 2 - 5 mm, insbesondere ca. 3 mm, aufweisen. Die in den Generator durch den kreisförmigen Schlitz eintretende Generatorkühlluft wird über den zweiten, inneren Durchgang des Lüfterrads wieder aus dem Generatorraum gesaugt. Der zweite, innere Durchgang liegt vorzugsweise in Form von kreisförmigen Durchbrechungen des Lüfterrads vor. Diese Durchbrechungen, beispielsweise 5 bis 7 in ihrer Anzahl, haben vorzugsweise einen Durchmesser im Bereich von 20 bis 50 mm, insbesondere 30 mm. Wesentlich hierbei ist, dass mit der Bohrung der Durchbrechungen stets eine mechanische Schwächung des Lüfterrads verbunden ist, so dass das Lüfterrad, je nach Größe der auftretenden mechanischen Kräfte, nur eine bestimmte Anzahl von Durchtrittslöchern aufweisen sollte, da ansonsten eine Erhöhung der Wandstärke des Lüfterrads in diesem Bereich notwendig ist.

Im Unterschied zu den bekannten Kühleinrichtungen wird darauf verzichtet die gesamte durch das Lüfterrad angesaugte Kühlluft zur Kühlung des Generators einzusetzen - vielmehr wird nur ein zur Kühlung des weniger Kühlleistung erfordernden Generators ausreichender kleinerer Teil der angesaugten Kühlluft in den Generatorraum abgezweigt.

Wegen der im allgemeinen wesentlich höheren Verlustwärme des Antriebsmotors kann die vom Generator angewärmte Kühlluft zur anschließenden Kühlung des Antriebsmotors verwendet werden. Der Generator der erfindungsgemäßen Stromerzeugereinheit weist vorzugsweise einen Wirkungsgrad von wenigstens 90% auf - im Unterschied zu den im Stand der Technik bekannten Generatoren, die im allgemeinen nur über einen Wirkungsgrad im Bereich von 75-85% verfügen. Die vom Generator bereits angewärmte Kühlluft wird zur Kühlung des Motors stets auch mit vom Lüfterrad frisch angesaugter Kühlluft vermischt, so dass eine ausreichende Verlustwärmeabführung des Antriebsmotors jedenfalls gewährleistet ist.

Die Durchmesser des ersten, äußeren Durchgangs und zweiten, inneren Durchgangs sind entsprechend den erforderlichen Kühlleistungen zu dimensionieren. Eine größere Generatorverlustwärme bedingt eine größere Menge an zugeführter Generatorkühlluft und umgekehrt.

Um zu gewährleisten, dass die Generatorkühlluft mit annähernd gleicher Strömungsgeschwindigkeit in den Generator eintritt und diesen wieder verlässt, ist es bevorzugt, wenn die Querschnittsfläche des ersten Durchgangs und die Querschnittsfläche des zweiten Durchgangs im wesentlichen gleich ist.

In besonders vorteilhafter Weise muss die erfindungsgemäße Stromerzeugereinheit keine Lufteintrittsöffnungen im Generatorgehäuse aufweisen, und kann deshalb generatorseitig dicht, insbesondere staub- und wasserdicht, ausgeführt werden. Im Unterschied zu im Stand der Technik bekannten Vorkehrungen für die Staub- und Wasserdichtigkeit kann dieser Schutz platzsparend, ohne technisch aufwändige Mittel und überaus preiswert erreicht werden. Hierbei ist es bevorzugt, wenn der Generator einen Schutzgrad für Berührungs- und Fremdkörperschutz nach DIN 40050 (erster Index) von wenigstens der Ziffer 6 hat. Weiterhin ist es bevorzugt, wenn der Generator einen Schutzgrad für Wasserschutz nach DIN 40050 (zweiter Index) von wenigstens der Ziffer 4 hat. In Bezug auf die mechanische Belastung ist es bevorzugt, wenn der Generator Generatorgehäuse einen Schutzgrad nach DIN 40050 (dritter Index) von wenigstens der Ziffer 3 hat. Hierzu sei jedoch festgestellt, dass die mechanische Belastbarkeit des Generatorgehäuses wesentlich von der Wahl des Materials abhängt und deshalb weitgehend im Belieben des Fachmanns liegt.

Eine besonders vorteilhafte Ausführungsform des erfindungsgemäßen Vorrichtung sieht vor, dass dem Generator - entsprechend dem gegenüber dem Antriebsmotor im allgemeinen weitaus geringeren Kühlbedarf - wenigstens 5% und höchstens 10% der vom Lüfterrad abgeführten Kühlluft als Generatorkühlluft zugeführt werden.

In vorteilhafter Weise wird die Generatorkühlluft vor Eintritt in den Generator abgelenkt, wodurch bewirkt wird, dass mit der Kühlluft angesaugte feste und flüssige Verunreinigungen aufgrund ihrer Massenträgheit an den Wänden der Kühlluftführung abgeschieden werden, bevor die Generatorkühlluft in den Generator eintritt. Hierdurch kann in einfacher Weise eine Reinigung der Kühlluft bewirkt werden, welche ansonsten durch technisch aufwändige und teure Vorkehrungen, wie Filtersysteme und dergleichen erfolgen müsste.

Die Erfindung wird nun anhand eines Ausführungsbeispiels näher erläutert, wobei Bezug auf die beigefügte Zeichnung genommen wird.

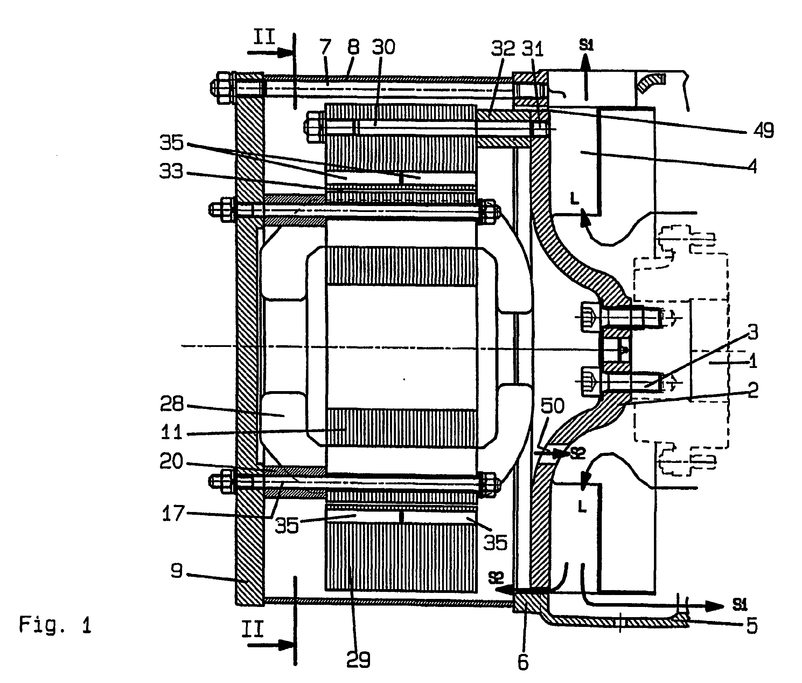

- Fig. 1: zeigt einen Axialschnitt durch eine Motor-/Generatoreinheit.

Die in Fig. 1 dargestellte einen Stromerzeuger bildende elektrische Maschine betrifft eine Einheit aus einem Antriebsmotor und einem Synchrongenerator. Als Antriebsmotor kommt bevorzugt ein Dieselmotor in Frage, von welchem lediglich das anschlussseitige Ende seiner Kurbelwelle 1 gestrichelt gezeichnet ist.

Stirnseitig an der Kurbelwelle 1 ist ein Lüfterrad 2 mittels Schrauben 3 angebaut. Das Lüfterrad 2 besitzt eine Beschaufelung 4, durch welche zur Erzeugung von Luftströmen gemäß Pfeil S1 zur Motorkühlung, bzw. gemäß Pfeil S2 zur Generatorkühlung, die Kühlluft gemäß Pfeil L motorseitig in axialer Richtung angesaugt wird und in radialer Richtung abströmt. Der Kühlluftstrom S2 wird durch einen in Fig. 1 dargestellten ersten äußeren Durchgang 49 in Form eines ringförmigen Schlitzes (siehe nach links gerichteter Pfeil S2 in Fig. 1) in den Generatorraum geführt. Die in den Generatorraum geführte Kühlluft S2 wird über die radial innerhalb der Beschaufelung 4 des Lüfterrads 2 angeordneten Durchtrittslöcher 50 (siehe nach rechts gerichteter Pfeil S2 in Fig. 1) durch die dort herrschende Saugwirkung des Lüfterrads 2 aus dem Generatorraum gesaugt.

Innerhalb des Generatorraums können sich, abhängig von den Strömungswiderständen der möglichen Strömungswege, mehrere Kühlluftströmungen ausbilden. Im gezeigten Ausführungsbeispiel bilden sich im wesentlichen 2 unterschiedliche Kühlluftströmungen aus, ein kürzerer Strömungsweg zwischen dem Schlitz 49 und den Durchtrittslöchern 50, bei welchem die Statorwicklung am motorseitigen Wickelkopf gekühlt wird, sowie ein längerer Strömungsweg, bei dem die Generatorkühlluft die Statorwicklung 28 in ihrer gesamten räumlichen Ausdehnung kühlt. Wegen der guten Wärmeleitfähigkeit des eingesetzten Wicklungsmaterials spielt das relative Mengenverhältnis der unterschiedlichen Generatorkühlluftströme im Generatorraum eine untergeordnete Rolle.

Im gezeigten Ausführungsbeispiel ist die Eintrittsrichtung der Generatorkühlluft in den Generatorraum ungefähr senkrecht zur Radialenrichtung des Lüfterrads 2. Hierdurch ist gewährleistet, dass mit der Kühlluft transportierte feste und flüssige Verunreinigungen aufgrund deren Massenträgheit aus dem Generator-Kühlluftstrom abgeschieden werden.

Die Öffnungsbreite der Schlitzes 49 beträgt ungefähr 3 mm. In das Lüfterrad 2 sind 6 Durchtrittsöffnungen 50 mit einem Durchmesser von ungefähr 30 mm gebohrt. Die Querschnittsfläche des Schlitzes 49 ist so gewählt, dass sie der Summe der Querschnittsflächen der 6 Durchtrittsöffnungen 50 ungefähr gleich ist, wodurch ein gleichmäßiges Zu- und Abströmen von Generatorkühlluft gewährleistet werden kann.

Über die Öffnungsbreite des Schlitzes 49 kann der Anteil des in den Generatorraum abgezweigten Generatorkühlluftstroms geregelt werden. Aufgrund des sehr guten Wirkungsgrades des im Ausführungsbeispiel gezeigten Generators, welcher im allgemeinen oberhalb von 90% liegt, reicht es aus, wenn ca. 5-10% der vom Lüfterrad 2 angesaugten Kühlluft L dem Generator als Generatorkühlluft durch das Lüfterrad zugeführt werden.

Ein motorseitiges Anschlussgehäuse 5 umschließt den Raum, in dem das Lüfterrad 2 untergebracht ist, radial nach außen; es ist zum Motor hin offen und besitzt auf seiner gegenüberliegenden Seite einen Ringflansch 6 mit Gewindebohrungen zum Eindrehen von Befestigungsschrauben 7 für den Anschluss des zylindrischen Generatorgehäuses 8, wobei dieses auf beiden Stirnseiten planflächig eingespannt wird. Die Befestigungsschrauben 7 sind an der Innenseite des Generatorgehäuses 8 über den Umfang verteilt angeordnet und durchspannen die gesamte Gehäuselänge. An dem in der Zeichnung linken Ende des Generatorgehäuses 8 ist ein Generatorgehäusedeckel 9 vorgesehen, an dem der Stator 11 des Generators befestigt ist. Die Schäfte der Befestigungsschrauben 7 ragen durch Bohrungen in dem Generatorgehäusedeckel 9 hindurch.

Während über den Umfang verteilt gemäß dem vorliegenden Ausführungsbeispiel acht Befestigungsschrauben 7 vorgesehen sind, genügen zur Befestigung des Stators sechs Statorschrauben 17, welche durch Bohrungen des Blechpakets des Stators 11 hindurchgeführt sind und über Distanzhülsen 20 verschraubt sind.

Der Stator 11 nimmt die Wicklungsstränge der Drehstromwicklung 28 des Generators auf.

Der Stator 11 ist umgeben vom Rotor 29, welcher ebenfalls aus einem Blechpaket aufgebaut ist, welches mittels Spannschrauben 30 zusammengespannt wird, die mit einem motorseitigen Gewindeende 31 in entsprechende Gewindebohrungen des Lüfterrads 2 eingeschraubt sind. Zwischen Lüfterrad und der zugeordneten Seite des Rotors 29 sind auf die Spannschrauben 30 aufgeschobene Stützhülsen 32 eingespannt. Damit ist der Rotor 29 drehfest mit dem Lüfterrad 2 verbunden. An seinem Innenumfang bildet er einen schmalen ca. 2 mm breiten Luftspalt 33 gegenüber dem Stator 11. Außerdem besitzt der Rotor 29 in axialer Richtung durchgehende etwa kreisförmig innerhalb zweier Segmente verlaufende Taschen, in welche von beiden Seiten Magnetelemente 35 eingeschoben sind, welche für die magnetische Erregung des Generators verantwortlich sind.

## Patentansprüche

1. Stromerzeugereinheit aus Generator und Hubkolbenverbrennungsmotor als Antrieb, insbesondere aus Synchrongenerator und Dieselmotor, mit einer zur gemeinsamen Kühlung von Generator und Hubkolbenverbrennungsmotor vorgesehenen Kühleinrichtung mit einem die Kühlluft (L) motorseitig axial ansaugenden und radial abführenden Lüfterrad (2), welches einen ersten Durchgang (49) im radial äußeren Bereich der Beschaufelung (4) und einen zweiten Durchgang (50) radial innerhalb der Beschaufelung (4) umfasst, wobei ein kleinerer Teil (S2) der Kühlluft (L) ("Generatorkühlluft") nur dem Generator motorseitig durch den ersten Durchgang (49) zugeführt und durch den zweiten Durchgang (50) wieder abgeführt wird, und wobei ein überwiegender Teil (S1) der Kühlluft (L) ("Motorkühlluft") dem Hubkolbenverbrennungsmotor zugeführt wird.

2. Stromerzeugereinheit nach Anspruch 1,
**dadurch gekennzeichnet,**
**dass** der äußere Durchgang (49) ein kreisförmiger Schlitz ist.

3. Stromerzeugereinheit nach Anspruch 2,
**dadurch gekennzeichnet,**
**dass** der kreisförmige Schlitz eine öffnungsbreite im Bereich von 2 bis 5 mm, insbesondere 3 mm aufweist.

4. Stromerzeugereinheit nach Anspruch 1,
**dadurch gekennzeichnet,**
**dass** der innere Durchgang (50) in Form von kreisförmigen Durchbrechungen des Lüfterrads vorliegt.

5. Stromerzeugereinheit nach Anspruch 4,
**dadurch gekennzeichnet,**
**dass** eine kreisförmige Durchbrechung einen Durchmesser im Bereich von 20 bis 50 mm, insbesondere 30 mm aufweist.

6. Stromerzeugereinheit nach Anspruch 1,
**dadurch gekennzeichnet,**
**dass** die Querschnittsfläche des äußeren Durchgangs (49) und die Querschnittsfläche des inneren Durchgangs (50) im wesentlichen gleich ist.

7. Verfahren nach Anspruch 1,
**dadurch gekennzeichnet,**
**dass** die Generatorkühlluft (S2) wenigstens 5% und höchstens 10% der gesamten Kühlluft (L) ausmacht.

8. Verfahren nach Anspruch 1,
**dadurch gekennzeichnet,**
**dass** die Strömungsrichtung der Generatorkühlluft (S2) vor dem Eintritt in den Generator abgelenkt wird.

9. Verfahren nach Anspruch 8,
**dadurch gekennzeichnet,**
**dass** die Strömungsrichtung der Generatorkühlluft in einem Winkel von ungefähr 90°abgelenkt wird.

10. Stromerzeugereinheit nach Anspruch 1,
**dadurch gekennzeichnet,**
**dass** der Generator einen Schutzgrad für Berührungs- und Fremdkörperschutz nach DIN 40050 (erster Index) von wenigstens der Ziffer 6 hat.

11. Stromerzeugereinheit nach Anspruch 1,
**dadurch gekennzeichnet,**
**dass** der Generator einen Schutzgrad für Wasserschutz nach DIN 40050 (zweiter Index) von wenigstens der Ziffer 4 hat.

12. Stromerzeugereinheit nach Anspruch 1,
**dadurch gekennzeichnet,**
**dass** der Generator einen Schutzgrad für mechanische Belastung nach DIN 40050 (dritter Index) von wenigstens der Ziffer 3 hat.

13. Stromerzeugereinheit nach Anspruch 1,
**dadurch gekennzeichnet,**
**dass** der Generator einen Wirkungsgrad von wenigstens 90% aufweist.

## Claims

1. A power generation unit consisting of a generator and an internal combustion reciprocating piston engine as drive, in particular consisting of a synchronous generator and a diesel engine, with a cooling unit fitted for common cooling of the generator and the internal combustion reciprocating piston engine with a fan rotor (2) axially ingesting and radially discharging the cooling air (L) on the engine side, which comprises a first passage (49) in the radially outer region of the blading (4) and a second passage (50) radially within the blading (4), wherein
a smaller part (S2) of the cooling air (L) ("generator cooling air") is directed only to the generator on the engine side through the first passage (49) and is discharged again through the second passage (50) and wherein
a predominant part (S1) of the cooling air (L) ("engine cooling air") is directed to the internal combustion reciprocating piston engine.

2. The power generation unit according to Claim 1,
**characterised in that** the outer passage (49) is a circular slit.

3. The power generation unit according to Claim 2,
**characterised in that** the circular slit has an opening width in the range of 2 to 5 mm, in particular 3 mm.

4. The power generation unit according to Claim 1,
**characterised in that** the inner passage (50) exists in the form of circular piercings of the fan rotor.

5. The power generation unit according to Claim 4,
**characterised in that** a circular piercing has a diameter in the range of 20 to 50 mm, in particular 30 mm.

6. The power generation unit according to Claim 1,
**characterised in that** the cross-sectional area of the outer passage (49) and the cross-sectional area of the inner passage (50) are essentially equal.

7. A method according to Claim 1,
**characterised in that** the generator cooling air (S2) constitutes at least 5 % and at most 10 % of the total cooling air (L).

8. The method according to Claim 1,
**characterised in that** the flow direction of the generator cooling air (S2) is deflected before entry into the generator.

9. The method according to Claim 8,
**characterised in that** the flow direction of the generator cooling air is deflected through an angle of approximately 90°.

10. The power generation unit according to Claim 1,
**characterised in that** the generator has a level of protection for contact and foreign body protection according to DIN 40050 (first index) of at least code 6.

11. The power generation unit according to Claim 1,
**characterised in that** the generator has a level of protection for water protection according to DIN 40050 (second index) of at least code 4.

12. The power generation unit according to Claim 1,
**characterised in that** the generator has a level of protection for mechanical loading according to DIN 40050 (third index) of at least code 3.

13. The power generation unit according to Claim 1,
**characterised in that** the generator has an efficiency of at least 90 %.

## Revendications

1. Unité génératrice de courant constituée d'un générateur et d'un moteur à pistons à combustion interne assurant l'entraînement, notamment un générateur synchrone et un moteur Diesel, unité qui comprend pour le refroidissement commun du générateur et du moteur un dispositif de refroidissement comportant une roue de ventilateur (2) aspirant l'air de refroidissement (L) axialement du côté du moteur et le refoulant radialement, cette roue présentant un premier passage (49) situé dans la zone radialement externe des ailettes (4) et un second passage (50) situé dans la zone radialement interne de ces ailettes, de sorte qu'une partie assez faible (S2) de l'air de refroidissement (L) ("air de refroidissement du générateur") est amenée seulement au générateur du côté du moteur par le premier passage (49) et évacuée par le second passage (50), une partie principale (S1) de l'air de refroidissement (L) ("air de refroidissement du moteur") étant amenée au moteur à pistons à combustion interne.

2. Unité génératrice de courant selon la revendication 1, **caractérisée en ce que** le passage externe (49) est constitué par une fente de forme annulaire.

3. Unité génératrice de courant selon la revendication 1, **caractérisée en ce que** la fente de forme annulaire présente une largeur d'ouverture qui va de 2 à 5 mm, notamment égale à 3 mm.

4. Unité génératrice de courant selon la revendication 1, **caractérisée en ce que** le passage interne (50) est constitué par des ouvertures de forme circulaire de la roue de ventilateur.

5. Unité génératrice de courant selon la revendication 4, **caractérisée en ce qu'**un passage de forme circulaire a un diamètre qui va de 20 à 50 mm, notamment égal à 30 mm.

6. Unité génératrice de courant selon la revendication 1, **caractérisée en ce que** la surface de la section du passage externe (49) et la surface de la section du passage interne (50) sont pratiquement égales.

7. Unité génératrice de courant selon la revendication 1, **caractérisée en ce que** l'air de refroidissement de générateur (S2) représente au moins 5 % et au plus 10 % de l'ensemble de l'air de refroidissement (L).

8. Unité génératrice de courant selon la revendication 1, **caractérisée en ce que** la direction d'écoulement de l'air de refroidissement de générateur (S2) est déviée avant son entrée dans le générateur.

9. Unité génératrice de courant selon la revendication 8, **caractérisée en ce que** la déviation de l'écoulement de l'air de refroidissement de générateur correspond à peu près à un angle de 90°.

10. Unité génératrice de courant selon la revendication 1, **caractérisée en ce que** le générateur a un degré de protection contre les contacts et les corps étrangers selon la norme DIN 40050 (premier index) et correspondant au moins au chiffre 6.

11. Unité génératrice de courant selon la revendication 1, **caractérisée en ce que** le générateur a un degré de protection contre l'eau selon la norme DIN 40050 (deuxième index) et correspondant au moins au chiffre 4.

12. Unité génératrice de courant selon la revendication 1, **caractérisée en ce que** le générateur a un degré de protection contre les charges mécaniques selon la norme DIN 40050 (troisième index) correspondant au moins au chiffre 3.

13. Unité génératrice de courant selon la revendication 1; **caractérisée en ce que** le générateur présente un rendement d'au moins 90 %.
